# EUROPEAN PATENT APPLICATION

(11) **EP 4 793 734 A1**
(43) Date of publication of application: **19.08.2026**
(21) Application number: 24889159.0
(22) Date of filing: 07.11.2024
(51) Int. Cl.: G06F 1/16, G06F 1/26, G06F 1/3212, G06F 3/041, H02P 1/22, G06F 1/20, G06F 1/28

(54) **METHOD AND ELECTRONIC DEVICE INCLUDING FLEXIBLE DISPLAY**

(30) Priority: 07.11.2023 KR 20230152759; 05.01.2024 KR 20240002058
(71) Applicant: Samsung Electronics Co., Ltd., Suwon-si, Gyeonggi-do 16677 (KR)
(72) Inventor: CHO, Baekeun, Suwon-si, Gyeonggi-do 16677 (KR); KANG, Hyunggwang, Suwon-si, Gyeonggi-do 16677 (KR); KIM, Moonsun, Suwon-si, Gyeonggi-do 16677 (KR); KIM, Yangwook, Suwon-si, Gyeonggi-do 16677 (KR); LEE, Soyoung, Suwon-si, Gyeonggi-do 16677 (KR); HONG, Hyunju, Suwon-si, Gyeonggi-do 16677 (KR); PARK, Sungho, Suwon-si, Gyeonggi-do 16677 (KR); SONG, Kijin, Suwon-si, Gyeonggi-do 16677 (KR); EOM, Joohoon, Suwon-si, Gyeonggi-do 16677 (KR); OH, Kiyoung, Suwon-si, Gyeonggi-do 16677 (KR)
(74) Representative: Gulde & Partner
(86) International application number: PCT/KR2024/017559
(87) International publication number: WO 2025/100973

(57) **Abstract**

The present document relates to a method and an electronic device including a flexible display. According to an embodiment, the electronic device may include: a plurality of batteries; a flexible display; a motor for driving at least a portion of the flexible display to move; a motor driving circuit connected to the motor; a switch circuit including a plurality of switches for switching between a first state in which the plurality of batteries are connected in series and a second state in which the plurality of batteries are connected in parallel; a memory for storing instructions; and a processor. According to an embodiment, the instructions, when executed by the processor, may cause the electronic device to: identify an event for switching the electrical connection state of the plurality of batteries; and control the switch circuit to switch the electrical connection state from the first state to the second state or from the second state to the first state on the basis of the identified event. Other embodiments are also possible.

## Description

### [Technical Field]

Various embodiments of the disclosure relate to an electronic device including a flexible display and a method.

### [Background Art]

Recently, technology related to flexible displays bendable by a force applied from the outside has been actively developed. A flexible display may be temporarily bent or maintain a bent state by an applied force, and accordingly, a user may view a screen displayed on the display in various areas according to preference.

The user may manipulate the display into a desired form and use the manipulated display. In particular, a flexible display may also include a touch panel, and the user may provide an input to the display manipulated into a desired form. A display according to an embodiment provides an interface for the same input despite a change in form of the flexible display. Accordingly, when the form of the flexible display is changed, the user may have difficulty in providing an input.

An electronic device of a rollable or slidable type using a flexible display may use a driving motor to automatically operate expansion/contraction of the flexible display. Recently, since the thrust of the driving motor should be greater than a force obtained by summing a repulsive force for rolling or sliding the flexible display, a mechanical sliding friction force, and a back drive force of the motor, high power consumption is inevitable, and thus a high-power motor is being used for expansion/contraction of the flexible display of the electronic device.

### [Detailed Description of the Invention]

### [Technical Solution]

According to an embodiment of the disclosure, an electronic device includes a plurality of batteries, a flexible display, a motor configured to drive at least a portion of the flexible display to move, motor driving circuitry connected to the motor, switch circuitry including a plurality of switches configured to switch between a first state connecting the plurality of batteries in series and a second state connecting the plurality of batteries in parallel, memory storing instructions, and at least one processor.

According to an embodiment, the instructions, when executed by the at least one processor individually or collectively, cause the electronic device to identify an event for switching an electrical connection state of the plurality of batteries.

According to an embodiment, the instructions, when executed by the at least one processor individually or collectively, cause the electronic device to, based on the identified event, control the switch circuitry to switch the electrical connection state from the first state to the second state or from the second state to the first state.

According to an embodiment, a method of operating in an electronic device includes an operation of identifying an event for switching an electrical connection state of a plurality of batteries of the electronic device.

According to an embodiment, the method includes an operation of, based on the identified event, controlling switch circuitry of the electronic device to switch the electrical connection state from the first state to the second state or from the second state to the first state.

According to an embodiment, in the method, the first state is a state connecting the plurality of batteries in series, and the second state is a state connecting the plurality of batteries in parallel.

According to an embodiment, the switch circuitry includes a plurality of switches and is connected to motor driving circuitry of the electronic device connected to a motor configured to drive at least a portion of the flexible display of the electronic device to move.

According to an embodiment, in a non-transitory storage medium storing one or more programs, the one or more programs include instructions executable to, when executed by at least one processor of an electronic device, cause the electronic device to perform an operation of identifying an event for switching an electrical connection state of a plurality of batteries of the electronic device and an operation of, based on the identified event, controlling switch circuitry of the electronic device to switch the electrical connection state from the first state to the second state or from the second state to the first state.

According to an embodiment, in a non-transitory storage medium storing one or more programs, the first state is a state connecting the plurality of batteries in series, the second state is a state connecting the plurality of batteries in parallel, and the switch circuitry includes a plurality of switches and is connected to motor driving circuitry of the electronic device connected to a motor configured to drive at least a portion of the flexible display of the electronic device to move.

### [Brief Description of Drawings]

FIG. 1 is a block diagram illustrating an electronic device in a network environment according to various embodiments.
FIG. 2 is an exploded perspective view illustrating a structure of an electronic device according to an embodiment.
FIGS. 3A and 3B are views illustrating a structure of an electronic device according to an embodiment.
FIG. 4 is a circuit diagram illustrating a structure of an electronic device according to an embodiment.
FIG. 5 is a view illustrating an operation example of switch circuitry of an electronic device according to an embodiment.
FIG. 6 is a view illustrating a structure of an electronic device according to an embodiment.
FIG. 7 is a view illustrating an example of a method of operating in an electronic device according to an embodiment.
FIG. 8 is a view illustrating an example of a method of operating in an electronic device according to an embodiment.
FIG. 9 is a view illustrating an example of a method of operating in an electronic device according to an embodiment; and
FIG. 10 is a view illustrating an example of a method of operating in an electronic device according to an embodiment.
FIG. 11 is a view illustrating an example of a method of operating in an electronic device according to an embodiment.
FIG. 12 is a view illustrating an example of a method of operating in an electronic device according to an embodiment; and
FIG. 13 is a view illustrating a structure of an electronic device according to an embodiment.
FIGS. 14A and 14B are graphs illustrating an example of a voltage drop and efficiency of booster circuitry of an electronic device according to an embodiment.

In connection to description of the drawings, same or similar reference numerals may be used for same or similar components.

### [Mode for Carrying out the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions. As used herein, the term "user" may denote a human or another device (e.g., an artificial intelligent electronic device) using the electronic device.

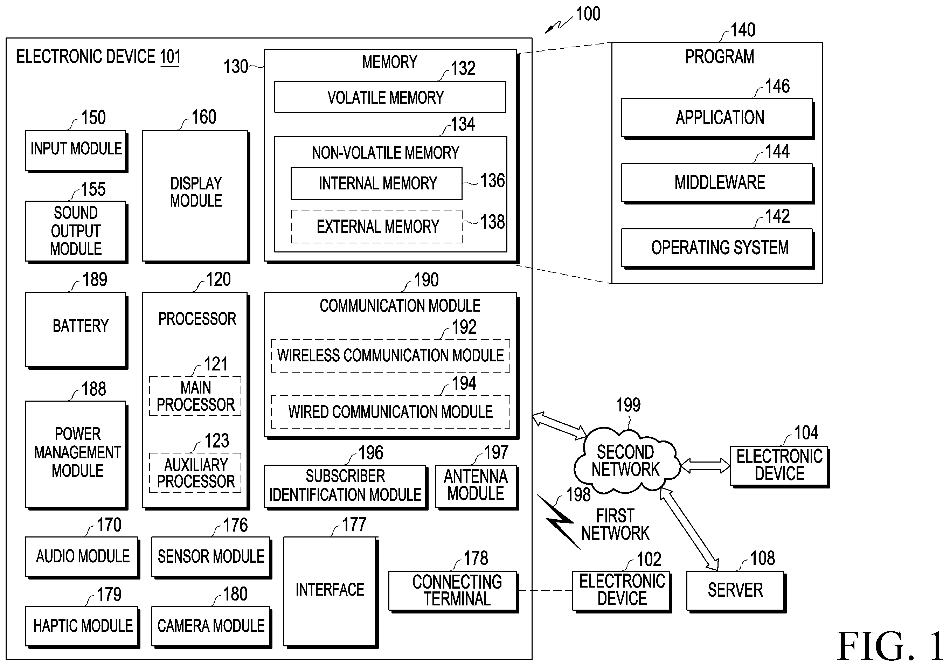

FIG. 1 is a block diagram illustrating an electronic device 101 in a network environment 100, according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{TM}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be integrated into one component (e.g., a single chip) or implemented as a plurality of separate components (e.g., a plurality of chips). The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

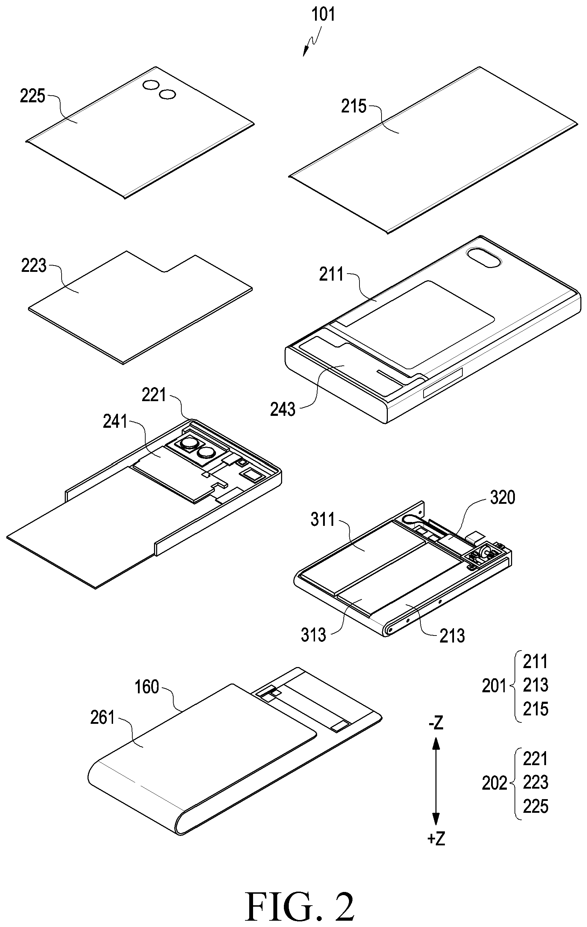

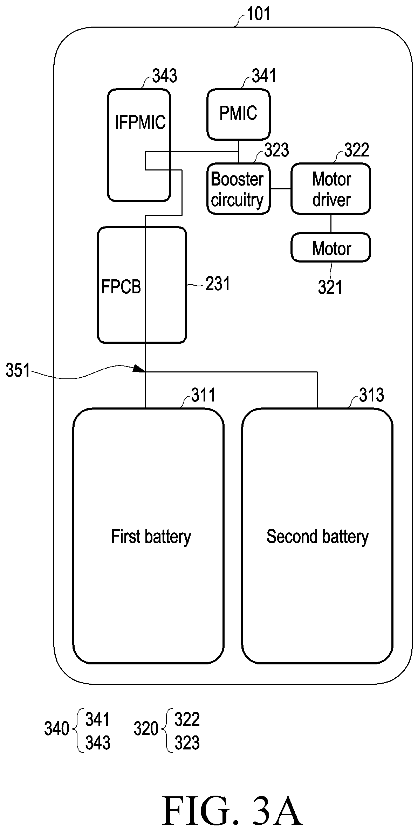

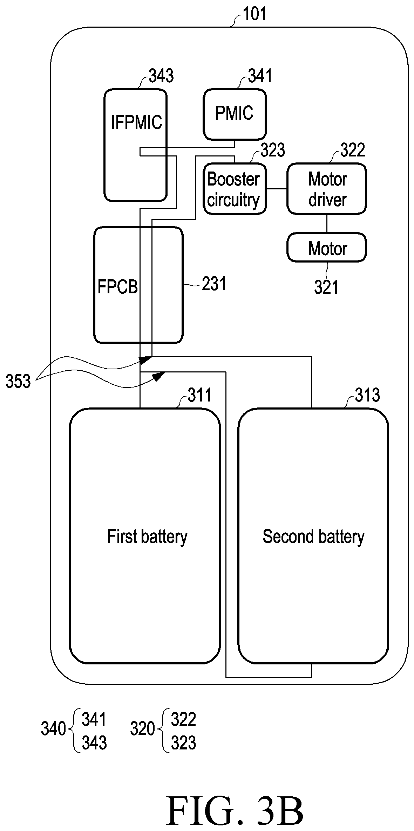

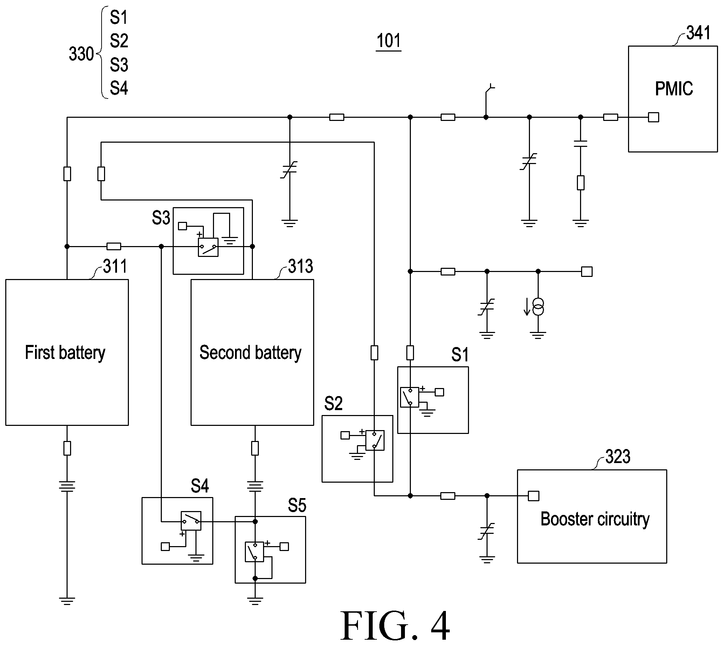

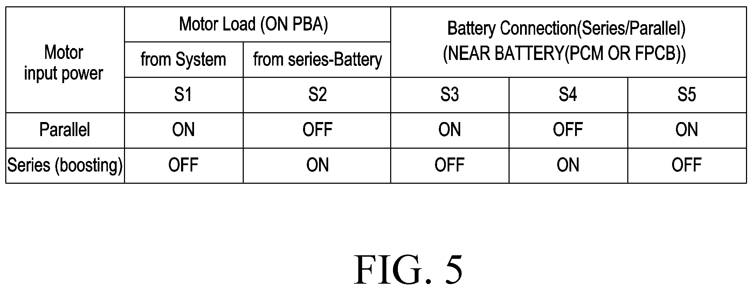

FIG. 2 is an exploded perspective view illustrating a structure of an electronic device according to an embodiment, FIGS. 3A and 3B are views illustrating a structure of an electronic device according to an embodiment, FIG. 4 is a circuit diagram illustrating a structure of an electronic device according to an embodiment, and FIG. 5 is a view illustrating an operation example of switch circuitry of an electronic device according to an embodiment.

Referring to FIGS. 1, 2, 3A, 3B, 4, and 5, an electronic device 101 according to an embodiment may include a flexible display 261. The electronic device 101 may be an electronic device of a rollable or slidable type in which a portion of the flexible display 261 is movable by rolling or sliding (e.g., a visually exposed portion is extendable or contractible). The electronic device 101 may include a housing including front covers 201: 211, 213, 215 and rear covers 202: 221, 223, 225, and may include a main board (main printed circuit board (PCB)) 241 and a sub board (sub PCB) 243 inside the housing. The main board 231 may include a flexible printed circuit board (FPCB).

According to an embodiment, the electronic device 101 (e.g., the electronic device 101 of FIG. 1) may include a display module 160 including the flexible display 261, a plurality of batteries 311, 313 (e.g., the battery 189 of FIG. 1), a motor 321, motor driving circuitry 320, switch circuitry 330, and at least one processor 120. According to an embodiment, the electronic device 101 may include a sensor module 176 including at least one temperature sensor for sensing an internal or external temperature. The electronic device 101 according to an embodiment is not limited thereto and may further include other components described in connection to FIG. 1. According to an embodiment, the electronic device 101 may include a power management module 340 (e.g., the power management module 188 of FIG. 1 or system circuitry) including a first power management circuit 341 (power management integrated circuit (PMIC)) and a second power management circuit 343 (IF PMIC).

According to an embodiment, the display module 160 may include the flexible display 261 extendable or contractible by the motor 321. The display module 160 is disposed to be exposed on a first surface (e.g., a front surface) of the housing, a window (not illustrated) of a transparent glass layer is disposed so that the first surface is exposed, and a display module 160 (e.g., a display panel) may be disposed below a second surface (e.g., a rear surface opposite to the first surface). The display panel may include a substrate (e.g., a flexible printed circuit board (FPCB)) and a display element layer disposed on the substrate. The display panel may include a touch sensitive panel (TSP). The display element layer may include a circuit layer including a thin film transistor (TFT) (not illustrated), an organic light emitting diode (OLED) (not illustrated) as a display element, and an insulation layer (IL) (not illustrated) therebetween. The display panel may include a display driver integrated circuit. According to an embodiment, the window 225 and the display panel may include a flexible display 261 that is at least partially bent and movable by rolling or sliding a portion thereof.

According to an embodiment, the plurality of batteries 311, 313 may be connected to the motor driving circuitry 320 and the power management module 340 through the switch circuitry 330 and may supply power to the motor driving circuitry 320 and the power management module 340. According to an embodiment, when no driving event is identified, the plurality of batteries 311, 313 may be set to a default connection of parallel (e.g., a parallel connection line 351 of FIG. 3A). When a battery setting screen is used to change to an always-high-voltage state, the plurality of batteries 311, 313 may be set to a default connection of series (e.g., a serial connection line 353 of FIG. 3B). When the plurality of batteries 311, 313 identify that a driving event of the motor 321 (e.g., generation of a motor driving trigger signal) occurs, a driving voltage of the motor 321 is determined, and if the determined driving voltage is a high voltage (e.g., a first voltage) exceeding a reference voltage (e.g., about 4 V for a low voltage), the plurality of batteries 311, 313 may be connected in series (e.g., a serial connection line 353 of FIG. 3B) to the booster circuitry 323 so that the booster circuitry 323 applies a second voltage (e.g., a high voltage of about more than 4 V to 8 V) corresponding to the driving voltage to the motor 321. The parallel connection line 351 of FIG. 3A is an electrical connection line briefly illustrated to describe a parallel connection of the plurality of batteries 311, 313, and the serial connection line 353 of FIG. 3B may be an electrical connection line briefly illustrated to describe a serial connection of the plurality of batteries 311, 313. According to an embodiment, the plurality of batteries 311, 313 may apply power of a second voltage (e.g., a high voltage) corresponding to the determined driving voltage to the motor 321 through the booster circuitry 323.

According to an embodiment, when a driving event (e.g., a motor driving trigger) of the motor 321 occurs, the plurality of batteries 311, 313 may be connected in series through at least one switch included in the switch circuitry 330 so that a high voltage is applied to the booster circuitry 323 of the motor driving circuitry 320. When the plurality of batteries 311, 313 identify that the motor 321 is not driven or the driving is terminated, the plurality of batteries 311, 313 may be connected in parallel through at least one switch included in the switch circuitry 330.

According to an embodiment, the motor driving circuitry 320 of the electronic device 101 is connected to the plurality of batteries 311, 313 through the switch circuitry 330, is connected to the motor 321 configured to drive the flexible display 261 to extend or contract, and may include a driving driver 322 driving the motor 321 and booster circuitry 323 applying a driving voltage to the motor 321 through the driving driver 322. According to an embodiment, the booster circuitry 323 may be connected in series or parallel with the plurality of batteries 311, 313 through the switch circuitry 330 according to whether the motor 321 is driven (e.g., occurrence of a driving event).

According to an embodiment, as illustrated in FIG. 5, the switch circuitry 330 of the electronic device 101 includes a plurality of switches (e.g., a first switch S1, a second switch S2, a third switch S3, a fourth switch S4, and a fifth switch S5) and may be connected to the plurality of batteries 311, 313 and the motor driving circuitry 320. The first switch S1 may be connected between the plurality of batteries 311, 313, an input terminal of the power management module 340, and an input terminal of the booster circuitry 323. The second switch S2 may be connected between the input terminal of the booster circuitry 323 and an input terminal of a second battery 313 among the plurality of batteries 311, 313. The third switch S3 may be connected between an input terminal of a first battery 311 among the plurality of batteries 311, 313 and the input terminal of the second battery 313. The fourth switch S4 may be connected between the input terminal of the first battery 311 and an output terminal of the second battery 313. The fifth switch S5 may be connected between the output terminal of the second battery 313 and a ground.

According to an embodiment, the at least one processor 120 may identify an event for switching an electrical connection state of the plurality of batteries 311, 313, and based on identifying the event, control the switch circuitry 330 to switch the electrical connection state from a first state connecting the plurality of batteries in series to a second state connecting the plurality of batteries in parallel or from the second state to the first state. Here, the event may be generated based on at least one of a battery voltage, a remaining battery capacity, user setting information, a current temperature, or information indicating whether charging is performed.

According to an embodiment, the at least one processor 120 may set a default connection state of the plurality of batteries 311, 313 to the second state and, when an event for switching an electrical connection state of the plurality of batteries occurs, identify whether to switch from the second state to the first state in order to increase the efficiency of the booster circuitry 323 applying power (e.g., about 10 W) to the motor. The at least one processor 120 may electrically connect the plurality of batteries 311, 313 in parallel or series to the booster circuitry 323 by a switching operation of the switch circuitry 330 according to whether to switch the electrical connection state. The at least one processor 120 may apply a battery voltage or a charging voltage supplied from an external charging device to the booster circuitry 323 as an input voltage according to a set electrical connection state or a changed electrical connection state, and drive the motor 321 with power (e.g., 10 W) of a voltage (e.g., a voltage boosted from the input voltage) output from the booster circuitry 323.

According to an embodiment, the at least one processor 120 may determine a driving voltage (e.g., about 4 V to 8 V) for operating the motor 321 based on identifying the event. According to an embodiment, based on the electrical connection state of the plurality of batteries 311, 313 being switched to the second state, if a low-voltage first voltage (e.g., about 4 V) is determined as the driving voltage for driving the motor 321, the at least one processor 120 may control the motor driving circuitry 320 so that the booster circuitry 323 applies power of the low-voltage first voltage to the motor 321. According to an embodiment, based on the electrical connection state of the plurality of batteries 311, 313 being switched to the first state, if a high-voltage second voltage (e.g., about more than 4 V to 8 V or less) greater than the first voltage is determined as the driving voltage for driving the motor 321, the at least one processor 120 may control the motor driving circuitry 320 so that the booster circuitry 323 applies power of the second voltage to the motor 321.

According to an embodiment, the at least one processor 120 may identify conditions for changing (e.g., from parallel to series) the connection state of the plurality of batteries 311, 313 based on at least one of the driving voltage for driving the motor 321, the battery voltage (e.g., the remaining battery capacity), a temperature value (e.g., an internal temperature or an external temperature), an external input power, or a battery driving voltage performance state (e.g., manual or automatic setting). Here, the conditions may include at least one of a condition for comparing the driving voltage with the battery voltage, a condition for comparing the battery voltage with a reference voltage of a low voltage (e.g., about 4 V), a condition for identifying whether low-temperature operation is performed, a condition for identifying whether an external charging device is connected (e.g., battery charging), or a condition for identifying a battery driving voltage performance state (e.g., manual or automatic setting).

According to an embodiment, the at least one processor 120 may switch (e.g., change from parallel (second state) to series (first state) or change from series (first state) to parallel (second state)) the connection state of the plurality of batteries 311, 313 based on designated conditions for changing the connection state of the plurality of batteries 311, 313.

According to an embodiment, in order to identify whether to switch from the second state to the first state, the at least one processor 120 may compare the driving voltage of the motor 321 and the battery voltage as one of the designated conditions, and as a result of the comparison, if the driving voltage of the motor is greater than or equal to the battery voltage, identify that the driving voltage of the motor 321 is a high voltage and control the switch circuitry 330 to switch the connection state from the second state to the first state.

According to an embodiment, in order to identify whether to switch from the second state to the first state, the at least one processor 120 may compare the driving voltage of the motor 321 and the battery voltage as one of the designated conditions, and as a result of the comparison, if the driving voltage of the motor 321 is greater than or equal to the battery voltage, identify that the driving voltage of the motor 321 is a high voltage and control the switch circuitry 330 to switch the second state to the first state.

According to an embodiment, the at least one processor 120 may identify whether the battery voltage is greater than or equal to a reference voltage of a low voltage, and if the battery voltage is greater than or equal to the reference voltage, change the connection state to the first state.

According to an embodiment, the at least one processor 120 may identify whether the battery voltage is greater than or equal to a reference voltage of a low voltage, and if the battery voltage is greater than or equal to the reference voltage, change the connection state to the first state. If the battery voltage is less than the reference voltage, the second state may be maintained.

According to an embodiment, the at least one processor 120 may identify whether a low-temperature operation state is present based on a temperature value (e.g., an internal temperature value and/or an external temperature value of the electronic device 101) obtained using at least one temperature sensor. If the at least one processor 120 identifies that the low-temperature operation state is present, the at least one processor 120 may change the connection state to the first state. If the at least one processor 120 identifies that the low-temperature operation state is not present, the at least one processor 120 may maintain the second state.

According to an embodiment, the at least one processor 120 may apply a battery voltage or a charging voltage supplied from an external charging device to the booster circuitry 323 as an input voltage according to a set connection state (e.g., the second state of a parallel connection state) or a changed connection state (e.g., the first state of a serial connection state), and drive the motor 321 with power (e.g., about 10 W) of a voltage (e.g., a voltage boosted from the input voltage) output from the booster circuitry 323. According to an embodiment, when the at least one processor 120 connects the plurality of batteries 311, 313 to the booster circuitry 323 in parallel, the at least one processor 120 may apply a battery voltage output from at least one battery among the plurality of batteries 311, 313 connected in parallel to the booster circuitry 323 to an input terminal of the booster circuitry 323, and based on the driving voltage to be driven being the first voltage, boost the input voltage input to the booster circuitry 323 to the first voltage and drive the motor 321 by applying power of the first voltage to the motor 321. According to an embodiment, when the at least one processor 120 connects the plurality of batteries 311, 313 to the booster circuitry in series, the at least one processor 120 may apply a battery voltage output from the plurality of batteries 311, 313 connected in series to the booster circuitry 323 to an input terminal of the booster circuitry 323, and based on the driving voltage to be driven being a second voltage (e.g., a high voltage) greater than the first voltage, boost the input voltage input to the booster circuitry 323 to the second voltage and drive the motor 321 by applying power of the second voltage to the motor 321. The electronic device according to an embodiment may move the flexible display 261 corresponding to the driving of the motor 321.

According to an embodiment, when the at least one processor 120 connects the plurality of batteries 311, 313 in series (e.g., a serial connection state), the at least one processor 120 may turn off the first switch S1, the third switch S3, and the fifth switch S5 included in the switch circuitry 330, and turn on the second switch S2 and the fourth switch S4 included in the switch circuitry 330. The plurality of switches included in the switch circuitry 330 may be a pole switch such as SPST or SPDT, or a MOSFET switch, but the disclosure is not limited thereto. A turn-off of a switch is a representation for electrical disconnection and may mean an off or open state, and a turn-on of a switch is a representation for electrical connection and may mean an on state, a closed state, or a short-circuit state.

According to an embodiment, when the at least one processor 120 connects the plurality of batteries 311, 313 in parallel (e.g., a parallel connection state), the at least one processor 120 may turn on the first switch S1, the third switch S3, and the fifth switch S5 included in the switch circuitry 330, and turn off the second switch S2 and the fourth switch S4 included in the switch circuitry 330.

According to an embodiment, the at least one processor 120 may identify that the power management module 340 (e.g., the first power management module 341) may continuously receive system power from the first battery 311. The power management module 340 according to an embodiment is connected to an input terminal of the first battery 311 among the plurality of batteries 311, 313 and may continuously receive system power from the first battery 211 regardless of the series or parallel connection of the plurality of batteries 311, 313. The power management module 340 according to an embodiment is connected to the booster circuitry 323 when the first switch S1 is turned on and, when the first switch S1 and the third switch S3 are turned on and the plurality of batteries 311, 313 are connected in parallel, may be connected to the first battery 311 and the second battery 313 connected in parallel.

According to an embodiment, when the first switch S1 and the third switch S3 are turned on and the plurality of batteries 311, 313 connected in parallel are connected to the power management module 340 and the booster circuitry 323, the at least one processor 120 may identify that the battery voltage is applied to an input voltage (VSYS) of the power management module 340 and the booster circuitry 323.

According to an embodiment, when the motor 321 is terminated or not driven, the at least one processor 120 may identify that the booster circuitry 323 may be connected to the plurality of batteries 311, 313 connected in parallel. When the motor 321 is terminated or not driven, the at least one processor 120 may change to the second state of a default setting connection state. Here, a current applied to the motor 321 may be 0 A, and power consumption (P_MOTOR) may be 0 W.

According to an embodiment, when an event for switching a driving state of the motor 321 to an always-high-voltage state occurs, the at least one processor 120 may change the second state of a parallel connection (1S2P connection) state of the plurality of batteries 311, 313 to the first state of a serial connection state and control the switch circuitry 330 to connect the plurality of batteries 311, 313 in series to the booster circuitry 323. The at least one processor 120 may obtain state information of the electronic device (e.g., state information related to at least one of dust introduction into a rack gear, malfunction (bending) of a mechanism, malfunction (crack) of a display, and/or a reduction in driving force of the motor), and the obtained state information may be provided through the flexible display. Based on the state information, the flexible display may additionally provide that an always-high-voltage driving of the motor is required due to an increase in rolling or sliding friction of the flexible display or a decrease in thrust, and although a state is unrelated to high-voltage driving conditions of the motor such as a temperature or a battery voltage (or a remaining capacity), the user of the electronic device may know that high-voltage (or high-power) driving of the motor is required. In such a case, the user may set, for example through a user setting screen, to operate the plurality of batteries in the first state of an always-serial connection state during motor driving.

When identifying that always-high-voltage driving of the motor is required, the at least one processor 120 according to an embodiment may control the flexible display 261 to display a driving battery setting screen in order to change to the always-high-voltage state. When the at least one processor 120 receives a selection input of an object for motor driving voltage performance selection included in the battery setting screen, the at least one processor 120 may control the flexible display 261 to display an extended screen (e.g., a switched screen or a pop-up screen) from the battery setting screen and, when receiving a selection input of a second object (e.g., manual (always high voltage)) included in the extended screen, may change to the always-high-voltage state so that the motor 321 is driven at always high voltage. Here, the motor driving voltage performance selection is a representation for user understanding, and may actually be replaced by selecting a motor driving voltage type or selecting an electrical connection state of the plurality of batteries supplying power for motor driving from among a parallel connection and a serial connection.

When the at least one processor 120 according to an embodiment receives a selection input of a first object (e.g., automatic) included in the extended screen, the at least one processor 120 may automatically determine an optimal driving voltage based on a remaining battery capacity (e.g., a battery voltage) and/or conditions set based on low-temperature operation and drive the motor 321. According to an embodiment, when the at least one processor 120 receives a selection input of the first object (e.g., automatic) included in the extended screen, the at least one processor 120 may perform an operation of automatically controlling the switch circuitry 330 to change the connection state of the plurality of batteries 311, 313 based on preset conditions for changing the connection state of the plurality of batteries 311, 313.

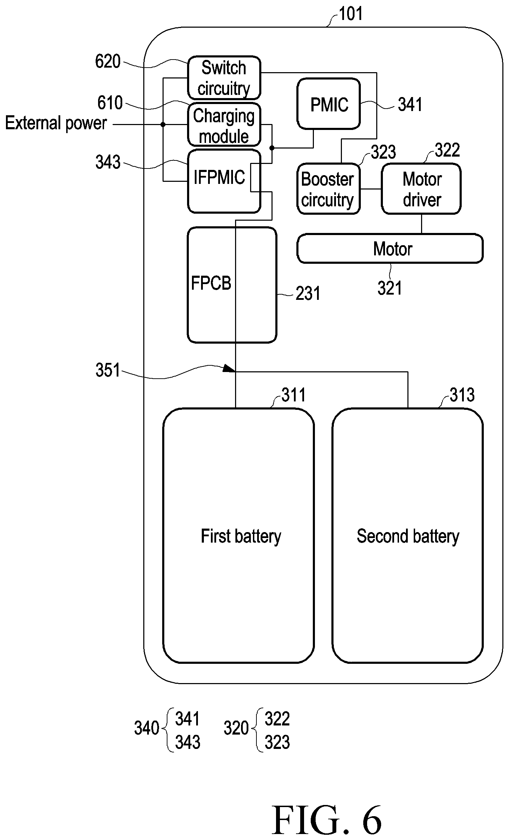

FIG. 6 is a view illustrating a structure of an electronic device according to an embodiment.

Referring to FIG. 6, according to an embodiment, the electronic device 101 may further include a charging module 610 connected to an external charging device (e.g., a wall charger or a portable battery) to directly receive charging power from the external charging device and switch circuitry (e.g., a sixth switch) 620. The external charging module 610 may receive a charging voltage (VBUS) (e.g., 9 V) input from the external charging device and charge the plurality of batteries 311, 313 by applying charging power of the charging voltage to the plurality of batteries 311, 313 through the power management module 340. The plurality of batteries 311, 313 may be in a parallel connection state. In FIG. 6, a line 351 illustrating the parallel connection of the plurality of batteries 311, 313 may be an electrical connection line briefly illustrated to describe the parallel connection of the batteries 311, 313. According to an embodiment, the second power management circuit 343 of the power management module 340 may apply power of the charging voltage (V_{BUS}) input from the external charging device to internal modules of the electronic device 101 through the first power management module 341 as a system power. According to an embodiment, one end of the switch circuitry 620 is connected to the external charging device, and the other end may be connected to the booster circuitry 323. The switch circuitry 620 may be turned on for connection to the booster circuitry 323 when the input charging voltage (V_{BUS}) (e.g., 9 V) is applied. When the switch circuitry 620 is turned on, the booster circuitry 323 may apply power of the charging voltage to the motor 321. According to an embodiment, when the switch circuitry (e.g., sixth switch) 620 is turned on so that the charging voltage is directly applied to the booster circuitry 323, the first switch S1 of the switch circuitry 330 is turned off, and the booster circuitry 323 may not be connected to the first power management module 341. According to an embodiment, when the switch circuitry 620 is turned on so that the charging voltage is directly applied to the booster circuitry 323, the second switch S2 of the switch circuitry 330 is turned off, and the booster circuitry 323 may not be connected to the plurality of batteries 311, 313 connected in parallel.

As such, in an embodiment, the main components of the electronic device have been described through the electronic device 101 of FIGS. 1 and 2. According to an embodiment, however, all of the components of FIGS. 1 and 2 are not essential components, and the electronic device 101 may be implemented with more or less components than those shown. The positions of the major components of the electronic device 101 described above in connection with FIGS. 1 and 2 may be varied according to various embodiments of the present invention.

According to an embodiment, an electronic device (e.g., the electronic device 101 of FIGS. 1, 2, 3A, 3B, and 6) may include a plurality of batteries 311, 313, a flexible display (the display module 160 of FIG. 1 or the flexible display 261 of FIG. 2), a motor (e.g., the motor 321 of FIGS. 3A, 3B, 6, and 13) configured to drive at least a portion of the flexible display to move, motor driving circuitry (e.g., the motor driving circuitry 320 of FIGS. 3A and 3B) connected to the motor, switch circuitry (e.g., the switch circuitry 330 of FIG. 4) including a plurality of switches configured to switch between a first state connecting the plurality of batteries in series and a second state connecting the plurality of batteries in parallel, memory (the memory 130 of FIG. 1) storing instructions, and at least one processor (the processor 120 of FIG. 1).

According to an embodiment, the instructions may, when executed by the at least one processor individually or collectively, cause the electronic device to identify an event for switching an electrical connection state of the plurality of batteries.

According to an embodiment, the instructions may, when executed by the at least one processor individually or collectively, cause the electronic device to, based on identifying the event, control the switch circuitry to switch the electrical connection state from the first state to the second state or from the second state to the first state.

According to an embodiment, the motor driving circuitry may further include booster circuitry (e.g., the booster circuitry 323 of FIGS. 3A, 3B, 6, and 13) connected to the plurality of batteries and the motor.

According to an embodiment, the instructions may, when executed by the at least one processor individually or collectively, cause the electronic device to, based on the electrical connection state being switched to the first state, apply power of a first voltage to the motor by the booster circuitry connected to the plurality of batteries switched to the first state to drive the motor, and based on the electrical connection state being switched to the second state, apply power of a second voltage to the motor by the booster circuitry connected to the plurality of batteries switched to the second state to drive the motor.

According to an embodiment, the switch circuitry may include a first switch connected between the plurality of batteries and the booster circuitry, a second switch connected between the booster circuitry and an input terminal of a second battery among the plurality of batteries, a third switch connected between an input terminal of a first battery among the plurality of batteries and the input terminal of the second battery, a fourth switch connected between the input terminal of the first battery and the output terminal of the second battery and a ground, and a fifth switch connected between the output terminal of the second battery and a ground.

According to an embodiment, the instructions may, when executed by the at least one processor individually or collectively, cause the electronic device to turn off the first switch, the third switch, and the fifth switch, and turn on the second switch and the fourth switch to switch the electrical connection state to the first state, and turn on the first switch, the third switch, and the fifth switch, and turn off the second switch and the fourth switch to switch the electrical connection state to the second state.

According to an embodiment, the event may be generated based on at least one of a battery voltage, a remaining battery capacity, user setting information, a current temperature, or information indicating whether charging is performed.

According to an embodiment, the electronic device further includes a power management module (e.g., the power management module 188 of FIG. 1, the power management module 340 of FIGS. 3A and 3B), and the power management module is connected to a first battery among the plurality of batteries to continuously receive system power from the first battery and may be connected to the booster circuitry when a first switch is turned on.

According to an embodiment, the instructions may, when executed by the at least one processor individually or collectively, cause the electronic device to, based on a driving voltage for driving the motor being greater than or equal to a battery voltage, control the switch circuitry to connect the plurality of batteries in series.

According to an embodiment, the instructions may, when executed by the at least one processor individually or collectively, cause the electronic device to, based on the battery voltage being less than a reference voltage, control the switch circuitry to switch the electrical connection state to the first state.

According to an embodiment, the electronic device further includes at least one temperature sensor (e.g., the sensor module 176 of FIG. 1), and the instructions may, when executed by the at least one processor individually or collectively, cause the electronic device to obtain a temperature value from at least one of the at least one temperature sensor or an external electronic device, and based on the temperature value being less than or equal to a threshold temperature value, control the switch circuitry to switch the electrical connection state to the first state.

According to an embodiment, the electronic device may further include second switch circuitry disposed between an external charging device and the booster circuitry to apply a charging voltage supplied from the external charging device to the booster circuitry.

According to an embodiment, the instructions may, when executed by the at least one processor individually or collectively, cause the electronic device to, while the electrical connection state of the plurality of batteries is the second state, turn on a sixth switch to apply the charging voltage to the booster circuitry and turn off the first switch connected between the plurality of batteries connected in parallel and the booster circuitry.

According to an embodiment, the instructions may, when executed by the at least one processor individually or collectively, cause the electronic device to, in response to a request of a user, control the switch circuitry to maintain the plurality of batteries connected in series regardless of the driving event without performing switching of the electrical connection state of the plurality of batteries based on the event.

According to an embodiment, the instructions may, when executed by the at least one processor individually or collectively, cause the electronic device to, based on identifying that the driving of the motor is completed, control the switch circuitry to connect the plurality of batteries in parallel to the booster circuitry.

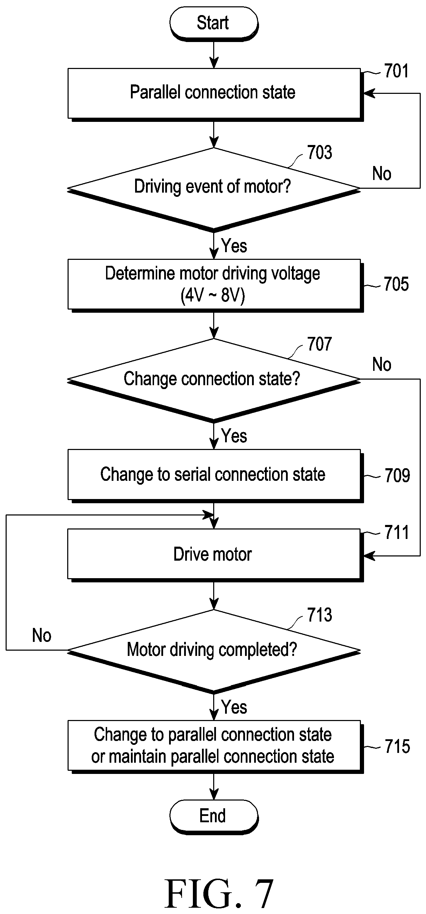

FIG. 7 is a view illustrating an example of a method of operating in an electronic device according to an embodiment. In the following embodiment, each operation may be performed sequentially, but is not necessarily performed sequentially. For example, the order of the operations may be changed, and at least two operations may be performed in parallel.

Referring to FIG. 7, in operation 701, an electronic device (e.g., the electronic device 101 of FIGS. 1, 2, 3A, 3B, and 6) according to an embodiment may identify a connection state (e.g., a parallel connection (1S2P connection) state (e.g., 2S1P_ENABLE=0) or an always-serial connection (2S1P connection) state (e.g., 2S1P_ENABLE=0)) of a plurality of batteries (e.g., the plurality of batteries 311, 313 of FIGS. 3A, 3B, and 6). The electronic device may set the connection state of the plurality of batteries to the second state of a default parallel connection state, and may change the setting to an always-serial connection state through a battery setting screen.

In operation 703, the electronic device may identify whether an event (e.g., a motor driving trigger) for switching an electrical connection state of the plurality of batteries occurs. As a result of the identification, if a driving event of the motor (e.g., the motor 321 of FIGS. 3A, 3B, and 6) occurs, the electronic device may perform operation 705, and otherwise, the electronic device may perform operation 701. Here, the event may be generated based on at least one of a battery voltage, a remaining battery capacity, user setting information, a current temperature, or information indicating whether charging is performed.

In operation 705, the electronic device may determine a driving voltage (e.g., about 4 V to 8 V) for driving the motor. The electronic device may automatically determine an optimal driving voltage based on a remaining capacity of the battery and/or a temperature.

In operation 707, when an event occurs, the electronic device may identify whether to change the connection state of the plurality of batteries in order to increase the efficiency of the booster circuitry (e.g., the booster circuitry 323 of FIGS. 3A, 3B, 4, and 6) applying power (e.g., about 10 W) to the motor. As a result of the identification, if it is identified that the connection state needs to be changed, operation 709 is performed, and otherwise, operation 711 may be performed to drive the motor while maintaining the parallel connection state. According to an embodiment, the electronic device may identify conditions for changing (e.g., from parallel to series (first state)) the connection state of the plurality of batteries based on at least one of the determined driving voltage of the motor, the battery voltage (e.g., the remaining battery capacity), a temperature value (e.g., an internal temperature or an external temperature), an external input power, or a battery driving voltage performance state (e.g., manual or automatic setting). Here, the conditions may include at least one of a condition for comparing the driving voltage with the battery voltage, a condition for comparing the battery voltage with a reference voltage of a low voltage (e.g., about 4 V), a condition for identifying whether low-temperature operation is performed, a condition for identifying whether an external charging device is connected (e.g., battery charging), or a condition for identifying a battery driving voltage performance state (e.g., manual or automatic setting).

In operation 709 (operation 707-YES), the electronic device may switch to the first state connecting the plurality of batteries in series by a switching operation of the switch circuitry (e.g., the switch circuitry 330 of FIG. 4) and connect the plurality of batteries connected in series to the booster circuitry.

In operation 711, the electronic device may apply a battery voltage or a charging voltage supplied from an external charging device to the booster circuitry as an input voltage according to a set electrical connection state or a changed electrical connection state, and drive the motor with power (e.g., 10 W) of a voltage (e.g., a voltage boosted from the input voltage) output from the booster circuitry. According to an embodiment, when the electronic device switches to the second state connecting the plurality of batteries to the booster circuitry in parallel by the switch circuitry, the electronic device may apply a battery voltage output from at least one battery among the plurality of batteries connected in parallel to the booster circuitry to an input terminal of the booster circuitry, and based on the driving voltage to be driven being the first voltage, boost the input voltage input to the booster circuitry to the first voltage and drive the motor by applying power of the first voltage to the motor. According to an embodiment, when the electronic device switches to the first state connecting the plurality of batteries to the booster circuitry in series by the switch circuitry, the electronic device may apply a battery voltage output from the plurality of batteries connected in series to the booster circuitry to an input terminal of the booster circuitry, and based on the driving voltage to be driven being a second voltage (e.g., a high voltage) greater than the first voltage, boost the input voltage input to the booster circuitry to the second voltage and drive the motor by applying power of the second voltage to the motor. The electronic device according to an embodiment may move at least a portion of the flexible display corresponding to the motor driving.

In operation 713, according to an embodiment, the electronic device may identify whether the motor driving is completed. As a result of the identification, when the driving of the motor is completed, the electronic device may perform operation 715, and otherwise, may perform operation 711 again.

In operation 715 (operation 713-YES), according to an embodiment, when the motor driving is completed, the electronic device may change or maintain the electrical connection state of the plurality of batteries to a parallel connection state (e.g., the second state) by a switching operation of the switch circuitry. According to an embodiment, as it is identified that the parallel connection state is to be changed in operation 707, if the motor is driven in the serial connection state in operations 709 and 711, in operation 715, the electronic device may switch (e.g., change or restore) from the serial connection state (e.g., the first state) to the parallel connection state (e.g., the second state) and connect the plurality of batteries in parallel to the booster circuitry. According to an embodiment, as it is identified that the parallel connection state is to be maintained in operation 707, if the motor is driven in the parallel connection state in operation 711, in operation 715, the electronic device may maintain the parallel connection state as it is.

According to an embodiment, when the motor is not driven, the electronic device may change the electrical connection state of the plurality of batteries to a parallel connection state (e.g., the second state) after a designated time or maintain the parallel connection state without changing the electrical connection state.

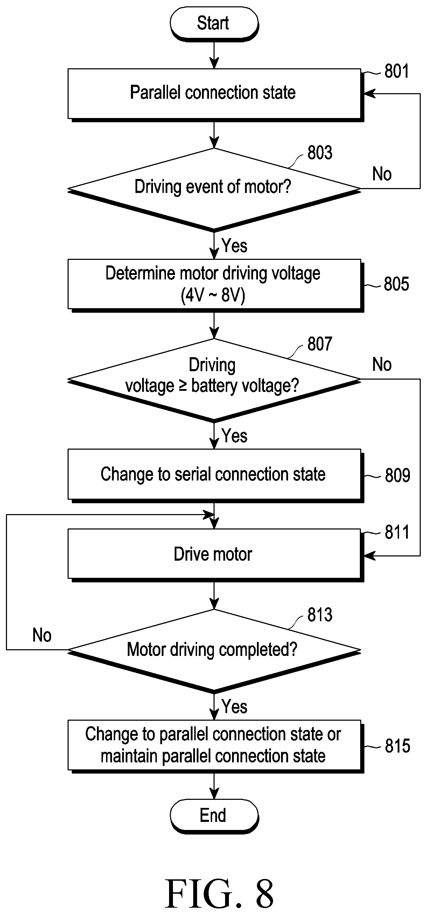

FIG. 8 is a view illustrating an example of a method of operating in an electronic device according to an embodiment. In the following embodiment, each operation may be performed sequentially, but is not necessarily performed sequentially. For example, the order of the operations may be changed, and at least two operations may be performed in parallel.

Referring to FIG. 8, in operation 801, an electronic device (e.g., the electronic device 101 of FIGS. 1, 2, 3A, 3B, and 6) according to an embodiment may identify that a plurality of batteries (e.g., the plurality of batteries 311, 313 of FIGS. 3A, 3B, and 6) are in the second state of a parallel connection (1S2P connection) state (e.g., 2S1P_ENABLE=0). The electronic device may set a default connection of the plurality of batteries to a parallel connection (e.g., the second state).

In operation 803, the electronic device may identify whether a driving event (e.g., a motor driving trigger) of the motor (e.g., the motor 321 of FIGS. 3A, 3B, and 6) occurs. As a result of the identification, if the driving event of the motor occurs, the electronic device may perform operation 805, and otherwise, the electronic device may perform operation 801.

In operation 805, the electronic device may determine a driving voltage (e.g., about 4 V to 8 V) for driving the motor. The electronic device may automatically determine an optimal driving voltage based on a remaining capacity of the battery and/or a temperature.

In operation 807, the electronic device may compare the driving voltage for driving the motor and the battery voltage, as one of the conditions for identifying whether to change from the second state to the first state of a serial connection state, and identify whether the driving voltage of the motor is greater than or equal to the battery voltage. As a result of the identification, if the determined driving voltage of the motor is greater than or equal to the battery voltage, the electronic device may identify that the driving voltage for driving the motor is a high voltage and perform operation 809. If the determined driving voltage is less than the battery voltage, the electronic device may identify that the driving voltage for driving the motor is a first voltage of a low voltage (e.g., about 4 V), maintain the parallel connection (e.g., the second state) of the plurality of batteries, and perform operation 811.

In operation 809, the electronic device may switch to the first state connecting the plurality of batteries in series (e.g., 2S1P_ENABLE=1) through switch circuitry (e.g., the switch circuitry 330 of FIG. 4) including a plurality of switches and connect the plurality of batteries connected in series to the booster circuitry (e.g., the booster circuitry 323 of FIGS. 3A, 3B, 4, and 6). The electronic device may identify that the driving voltage for driving the motor is to operate at a high-voltage second voltage (e.g., about more than 4 V to 8 V or less) greater than the reference voltage, and connect the plurality of batteries in series to the booster circuitry by the switch circuitry so that the booster circuitry applies power of the second voltage to the motor.

In operation 811, the electronic device may apply the battery voltage to the booster circuitry as an input voltage according to a set connection state (e.g., a parallel connection state) or a changed connection state (e.g., the first state of a serial connection state), and drive the motor with power (e.g., about 10 W) of a voltage (e.g., a voltage boosted from the input voltage) output from the booster circuitry.

In operation 813, according to an embodiment, the electronic device may identify whether the motor driving is completed. As a result of the identification, when the driving of the motor is completed, the electronic device may perform operation 815, and otherwise, may perform operation 811 again.

In operation 815 (operation 813-YES), according to an embodiment, when the motor driving is completed, the electronic device may change or maintain the electrical connection state of the plurality of batteries to a parallel connection state (e.g., the second state) by a switching operation of the switch circuitry. According to an embodiment, as it is identified that the parallel connection state is to be changed in operation 807, if the motor is driven in the serial connection state in operations 809 and 811, in operation 715, the electronic device may switch (e.g., change or restore) from the serial connection state (e.g., the first state) to the parallel connection state (e.g., the second state) and connect the plurality of batteries in parallel to the booster circuitry. According to an embodiment, as it is identified that the parallel connection state is to be maintained in operation 807, if the motor is driven in the parallel connection state in operation 811, in operation 815, the electronic device may maintain the parallel connection state as it is.

According to an embodiment, when the motor is not driven, the electronic device may change the electrical connection state of the plurality of batteries to a parallel connection state (e.g., the second state) after a designated time or maintain the parallel connection state without changing the electrical connection state.

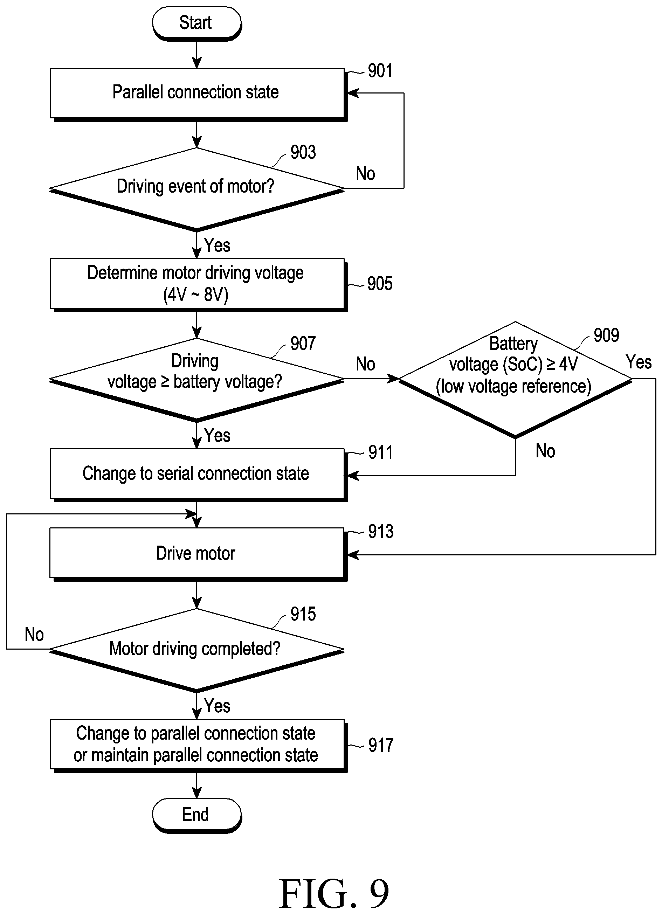

FIG. 9 is a view illustrating an example of a method of operating in an electronic device according to an embodiment; and In the following embodiment, the operations may be sequentially performed, but are not necessarily sequentially performed. For example, the order of the operations may be changed, and at least two operations may be performed in parallel.

Referring to FIG. 9, in operation 901, an electronic device (e.g., the electronic device 101 of FIGS. 1, 2, 3A, 3B, and 6) according to an embodiment may identify that a plurality of batteries (e.g., the plurality of batteries 311, 313 of FIGS. 3A, 3B, and 6) are in the second state of a parallel connection (1S2P connection) state (e.g., 2S1P_ENABLE=0). The electronic device may set a default connection of the plurality of batteries to a parallel connection (e.g., the second state).

In operation 903, the electronic device may identify whether a driving event (e.g., a motor driving trigger) of the motor (e.g., the motor 321 of FIGS. 3A, 3B, and 6) occurs. As a result of the identification, if the driving event of the motor occurs, the electronic device may perform operation 905, and otherwise, the electronic device may perform operation 901.

In operation 905, the electronic device may determine a driving voltage (e.g., about 4 V to 8 V) for driving the motor. The electronic device may automatically determine an optimal driving voltage based on a remaining capacity of the battery and/or a temperature.

According to an embodiment, the electronic device may identify whether to change from a parallel connection state to the first state of a serial connection state based on a condition for comparing the driving voltage for driving the motor with the battery voltage and/or a condition for comparing the battery voltage with a reference voltage of a low voltage (e.g., 4 V).

In operation 907, the electronic device may identify whether the determined driving voltage of the motor is greater than or equal to the battery voltage. As a result of the identification, if the determined driving voltage of the motor is greater than or equal to the battery voltage, the electronic device may identify that the driving voltage for driving the motor is a high voltage and perform operation 911. If the determined driving voltage of the motor is less than the battery voltage, the electronic device may identify that the driving voltage for driving the motor is a first voltage of a low voltage (e.g., about 4 V), maintain the parallel connection (e.g., the second state) of the plurality of batteries, and perform operation 909 or operation 913. Here, operation 907 may be omitted when only the condition for comparing the battery voltage with a reference voltage of a low voltage (e.g., 4 V) is identified.

In operation 909 (operation 907-NO), the electronic device may identify whether the battery voltage is greater than or equal to a reference voltage of a low voltage. As a result of the identification, if the battery voltage is greater than or equal to the reference voltage, operation 913 may be performed, and if the battery voltage is less than the reference voltage, operation 911 may be performed. If the battery voltage is less than the reference voltage, the remaining battery capacity is decreased, so the input voltage of the booster circuitry (e.g., the booster circuitry 323 of FIGS. 3A, 3B, 4, and 6) may be lowered. Accordingly, the booster circuitry requires higher voltage boosting to apply power of the determined driving voltage to the motor, so efficiency may decrease. In operation 909, the electronic device compared the battery voltage with a reference voltage of a low voltage, but may also identify whether to change the connection state based on the remaining battery capacity. For example, if the remaining battery capacity is less than or equal to a threshold level, operation 911 may be performed to switch to the first state, and if the remaining battery capacity exceeds the threshold level, since a high voltage may be provided to the motor, operation 913 may be performed to drive the motor while maintaining the second state.

In operation 911 (operation 907-YES, operation 909-NO), the electronic device may switch to the first state connecting the plurality of batteries in series (e.g., 2S1P_ENABLE=1) through switch circuitry including a plurality of switches and connect the plurality of batteries connected in series to the booster circuitry. The electronic device may identify that the driving voltage for driving the motor is to operate at a high-voltage second voltage (e.g., about more than 4 V to 8 V or less) greater than the reference voltage and switch to the first state connecting the plurality of batteries in series to the booster circuitry by the switch circuitry so that the booster circuitry applies power of the second voltage to the motor. Since the booster circuitry is connected to the plurality of batteries connected in series, a high voltage is applied to the input terminal, and thus the difference between the input voltage and the output voltage is decreased, thereby increasing efficiency.

In operation 913, the electronic device may apply the battery voltage to the booster circuitry as an input voltage according to a set connection state (e.g., a parallel connection state) or a changed connection state (e.g., a serial connection state), and drive the motor with power (e.g., 10 W) of a voltage (e.g., a voltage boosted from the input voltage) output from the booster circuitry.

In operation 915, according to an embodiment, the electronic device may identify whether the motor driving is completed. As a result of the identification, when the driving of the motor is completed, the electronic device may perform operation 917, and otherwise, may perform operation 913 again.

In operation 917 (operation 915-YES), according to an embodiment, when the motor driving is completed, the electronic device may change or maintain the electrical connection state of the plurality of batteries to a parallel connection state (e.g., the second state) by a switching operation of the switch circuitry. According to an embodiment, as it is identified that the parallel connection state is to be changed in operation 907, if the motor is driven in the serial connection state in operations 911 and 913, in operation 917, the electronic device may switch (e.g., change or restore) from the serial connection state (e.g., the first state) to the parallel connection state (e.g., the second state) and connect the plurality of batteries in parallel to the booster circuitry. According to an embodiment, as it is identified that the parallel connection state is to be maintained in operation 907, if the motor is driven in the parallel connection state in operation 913, in operation 917, the electronic device may maintain the parallel connection state as it is.

According to an embodiment, when the motor is not driven, the electronic device may change the electrical connection state of the plurality of batteries to a parallel connection state (e.g., the second state) after a designated time or maintain the parallel connection state without changing the electrical connection state.

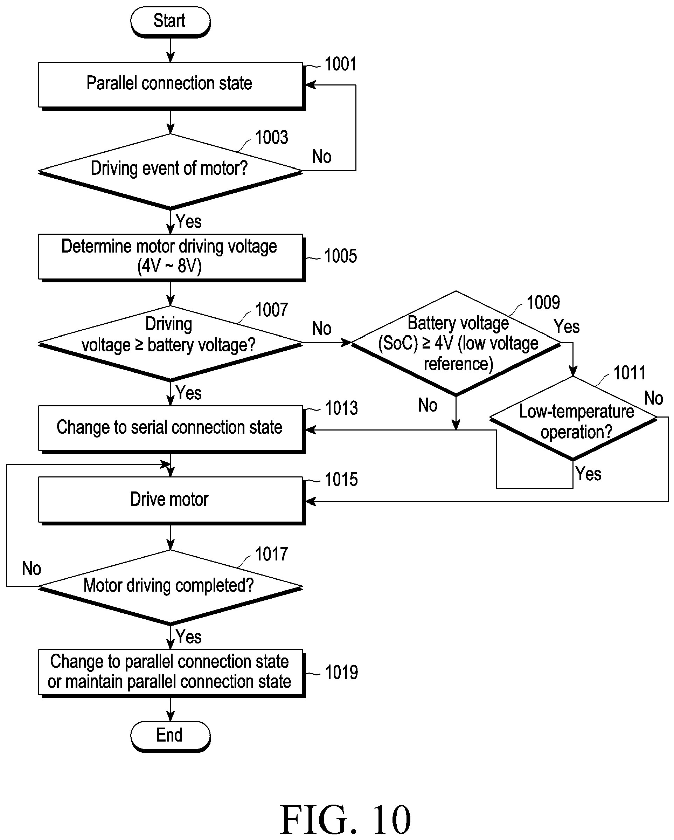

FIG. 10 is a view illustrating an example of a method of operating in an electronic device according to an embodiment. In the following embodiment, each operation may be performed sequentially, but is not necessarily performed sequentially. For example, the order of the operations may be changed, and at least two operations may be performed in parallel.

Referring to FIG. 10, in operation 1001, an electronic device (e.g., the electronic device 101 of FIGS. 1, 2, 3A, 3B, and 6) according to an embodiment may identify that a plurality of batteries (e.g., the plurality of batteries 311, 313 of FIGS. 3A, 3B, and 6) are in the second state of a parallel connection (1S2P connection) state (e.g., 2S1P_ENABLE=0). The electronic device may set a default connection of the plurality of batteries to a parallel connection (e.g., the second state).

In operation 1003, the electronic device may identify whether a driving event (e.g., a motor driving trigger) of the motor (e.g., the motor 321 of FIGS. 3A, 3B, and 6) occurs. As a result of the identification, if the driving event of the motor occurs, the electronic device may perform operation 1005, and otherwise, the electronic device may perform operation 1001.

In operation 1005, the electronic device may determine a driving voltage (e.g., about 4 V to 8 V) for driving the motor. The electronic device may automatically determine an optimal driving voltage based on a remaining capacity of the battery and/or a temperature.

According to an embodiment, the electronic device may identify whether to change from the second state of a parallel connection state to the first state of a serial connection state based on at least one of a condition for comparing the determined driving voltage with the battery voltage, a condition for comparing the battery voltage with a reference voltage of a low voltage (e.g., 4 V), or a low-temperature operation condition (e.g., an internal temperature value or an external temperature value).

In operation 1007, the electronic device may identify whether the determined driving voltage of the motor is greater than or equal to the battery voltage. As a result of the identification, if the determined driving voltage of the motor is greater than or equal to the battery voltage, the electronic device may identify that the driving voltage for driving the motor is a high voltage and perform operation 911. If the determined driving voltage of the motor is less than the battery voltage, the electronic device may identify that the driving voltage for driving the motor is a first voltage of a low voltage (e.g., about 4 V), maintain the parallel connection (e.g., the second state) of the plurality of batteries, and perform operation 1009 or operation 1015. Here, operation 1007 may be omitted when only the condition for comparing the battery voltage with a reference voltage of a low voltage (e.g., 4 V) is identified.

In operation 1009 (operation 1007-NO), the electronic device may identify whether the battery voltage is greater than or equal to a reference voltage of a low voltage. As a result of the identification, if the battery voltage is greater than or equal to the reference voltage, operation 1013 may be performed, and if the battery voltage is less than the reference voltage, operation 1011 may be performed. Here, the plurality of batteries connected in parallel may have the same voltage through cell balancing. Since each battery has a lower battery voltage as the remaining battery capacity decreases, the internal resistance increases as the battery voltage is lower, which may cause a higher voltage drop. If the battery voltage is less than the reference voltage, the booster circuitry may have decreased efficiency because higher voltage boosting is required to apply power of the determined driving voltage of the motor as the input voltage input from the batteries is lowered. Here, operation 1009 may be omitted when only the low-temperature operation condition is identified.

In operation 1011 (operation 1007-YES, operation 1009-NO), the electronic device may identify whether a low-temperature operation state is present based on a temperature value (e.g., an internal temperature value and/or an external temperature value of the electronic device 101) obtained using at least one temperature sensor. As a result of the identification, if the low-temperature operation state is present, the electronic device may perform operation 1015, and if the low-temperature operation state is not present, the electronic device may perform operation 1013.

In operation 1013 (operation 1007-YES, operation 1009-NO, operation 1011-YES), the electronic device may switch to the first state connecting the plurality of batteries in series (e.g., 2S1P_ENABLE=1) through switch circuitry including a plurality of switches and connect the plurality of batteries connected in series to the booster circuitry. The electronic device may identify that the driving voltage for driving the motor is to operate at a high-voltage second voltage (e.g., about more than 4 V to 8 V or less) greater than the reference voltage and switch to the first state connecting the plurality of batteries in series to the booster circuitry by the switch circuitry so that the booster circuitry applies power of the second voltage to the motor. Since the booster circuitry is connected to the plurality of batteries connected in series, a high voltage (e.g., a voltage exceeding the reference voltage (4 V)) is applied to the input terminal, and thus the difference between the input voltage and the output voltage is decreased, thereby increasing efficiency.

In operation 1015, the electronic device may apply the battery voltage to the booster circuitry as an input voltage according to a set connection state (e.g., a parallel connection state) or a changed connection state (e.g., a serial connection state), and drive the motor with power (e.g., 10 W) of a voltage (e.g., a voltage boosted from the input voltage) output from the booster circuitry.

In operation 1017, according to an embodiment, the electronic device may identify whether the motor driving is completed. As a result of the identification, when the driving of the motor is completed, the electronic device may perform operation 1019, and otherwise, may perform operation 1015 again.

In operation 1019 (operation 1017-YES), according to an embodiment, when the motor driving is completed, the electronic device may change or maintain the electrical connection state of the plurality of batteries to a parallel connection state (e.g., the second state) by a switching operation of the switch circuitry. According to an embodiment, as it is identified that the parallel connection state is to be changed in operation 1007, if the motor is driven in the serial connection state in operations 1013 and 1015, in operation 1019, the electronic device may switch (e.g., change or restore) from the serial connection state (e.g., the first state) to the parallel connection state (e.g., the second state) and connect the plurality of batteries in parallel to the booster circuitry. According to an embodiment, as it is identified that the parallel connection state is to be maintained in operation 1007, if the motor is driven in the parallel connection state in operation 913, in operation 1019, the electronic device may maintain the parallel connection state as it is.

According to an embodiment, when the motor is not driven, the electronic device may change the electrical connection state of the plurality of batteries to a parallel connection state (e.g., the second state) after a designated time or maintain the parallel connection state without changing the electrical connection state.

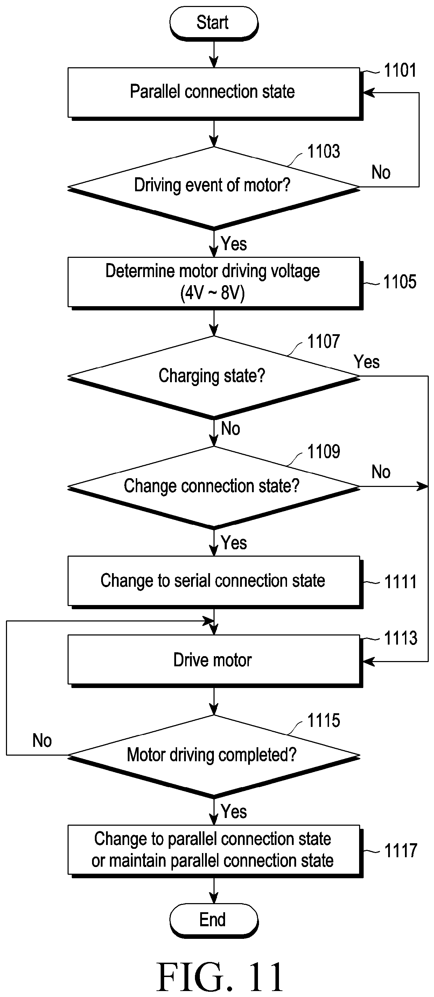

FIG. 11 is a view illustrating an example of a method of operating in an electronic device according to an embodiment. In the following embodiment, each operation may be performed sequentially, but is not necessarily performed sequentially. For example, the order of the operations may be changed, and at least two operations may be performed in parallel.

Referring to FIG. 11, in operation 1101, an electronic device (e.g., the electronic device 101 of FIGS. 1, 2, 3A, 3B, and 6) according to an embodiment may identify that a plurality of batteries (e.g., the plurality of batteries 311, 313 of FIGS. 3A, 3B, and 6) are in the second state of a parallel connection (1S2P connection) state (e.g., 2S1P_ENABLE=0). The electronic device may set a default connection of the plurality of batteries to a parallel connection (e.g., the second state).

In operation 1103, the electronic device may identify whether a driving event (e.g., a motor driving trigger) of the motor (e.g., the motor 321 of FIGS. 3A, 3B, and 6) occurs. As a result of the identification, if the driving event of the motor occurs, the electronic device may perform operation 1105, and otherwise, the electronic device may perform operation 1101.

In operation 1105, the electronic device may determine a driving voltage (e.g., about 4 V to 8 V) for driving the motor. The electronic device may automatically determine an optimal driving voltage based on a remaining capacity of the battery and/or a temperature.

In operation 1107, the electronic device may identify whether a charging state is connected to an external charging device and power is supplied from the external charging device. As a result of the identification, if the charging state is present, the electronic device may turn on a switch (e.g., the sixth switch 620 of FIG. 6) connected between the external charging device and the booster circuitry (e.g., the booster circuitry 323 of FIGS. 3A, 3B, 4, and 6) and perform operation 1113. As a result of the identification, if the charging state is not present, the electronic device may perform operation 1109. Operations 807 of FIG. 8, operations 907 and 909 of FIG. 9, and operations 1007 to 1011 of FIG. 10 may be performed. According to an embodiment, the electronic device may identify whether to change from the second state of a parallel connection state to the first state of a serial connection state based on at least one of a condition for comparing the driving voltage for driving the motor with the battery voltage, a condition for comparing the battery voltage with a reference voltage of a low voltage (e.g., 4 V), or a low-temperature operation condition (e.g., an internal temperature value or an external temperature value).

In operation 1109, the electronic device may identify whether to change the connection state of the plurality of batteries. As a result of the identification, if it is identified that the connection state needs to be changed, operation 1111 may be performed, and otherwise, operation 1115 may be performed to drive the motor so that the booster circuitry drives the motor with power of the determined driving voltage as the charging voltage is input as the input voltage of the booster circuitry while maintaining the second state. According to an embodiment, when the electronic device performs operation 1109, specifically, as in operation 807 of FIG. 8, operations 907 and 909 of FIG. 9, or operations 1007 to 1011 of FIG. 10, the electronic device may identify whether it is necessary to change the electrical connection state of the plurality of batteries.

In operation 1111 (operation 1109-YES), the electronic device may connect the plurality of batteries in series to the booster circuitry by a switching operation of the switch circuitry.

In operation 1113, the electronic device may apply the battery voltage or the charging voltage to the booster circuitry as an input voltage according to a set connection state (e.g., a parallel connection state) or a changed connection state (e.g., a serial connection state), and drive the motor with power (e.g., 10 W) of a voltage (e.g., a voltage boosted from the input voltage) output from the booster circuitry.

In operation 1115, according to an embodiment, the electronic device may identify whether the motor driving is completed. As a result of the identification, when the driving of the motor is completed, the electronic device may perform operation 1117, and otherwise, may perform operation 1113 again.

In operation 1117 (operation 1115-YES), according to an embodiment, when the motor driving is completed, the electronic device may change or maintain the electrical connection state of the plurality of batteries to a parallel connection state (e.g., the second state) by a switching operation of the switch circuitry. According to an embodiment, as it is identified that the parallel connection state is to be changed in operation 1109, if the motor is driven in the serial connection state in operations 1111 and 1113, in operation 1117, the electronic device may switch (e.g., change or restore) from the serial connection state (e.g., the first state) to the parallel connection state (e.g., the second state) and connect the plurality of batteries in parallel to the booster circuitry. According to an embodiment, as it is identified that the parallel connection state is to be maintained in operation 1109, if the motor is driven in the parallel connection state in operation 1113, in operation 1117, the electronic device may maintain the parallel connection state as it is.

According to an embodiment, when the motor is not driven, the electronic device may change the electrical connection state of the plurality of batteries to a parallel connection state (e.g., the second state) after a designated time or maintain the parallel connection state without changing the electrical connection state.

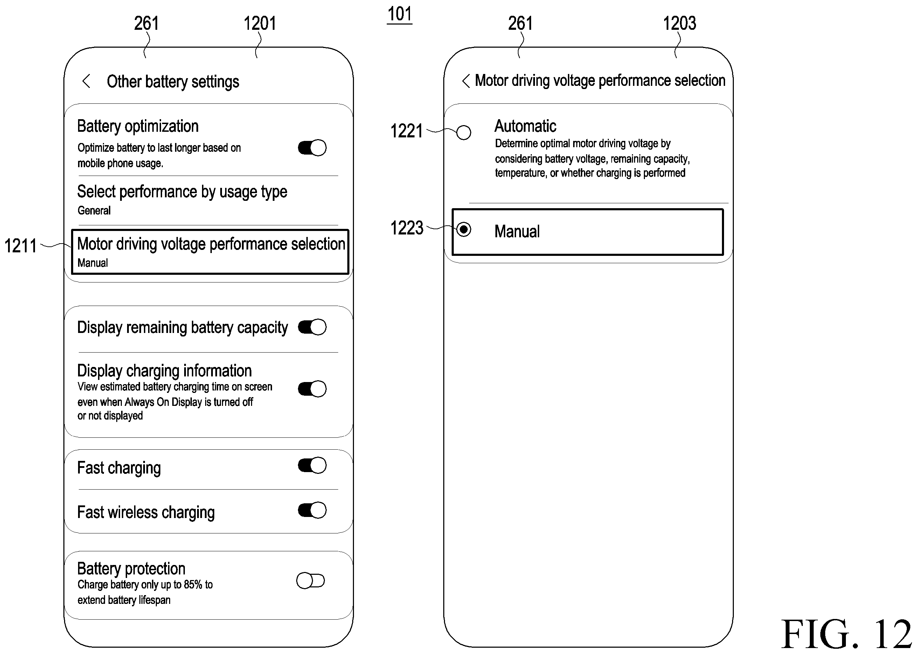

FIG. 12 is a view illustrating an example of a method of operating in an electronic device according to an embodiment; and

Referring to FIG. 12, when an event for switching a driving state of the motor (e.g., the motor 321 of FIGS. 3A, 3B, and 6) to an always-high-voltage state occurs, an electronic device (e.g., the electronic device 101 of FIGS. 1, 2, 3A, 3B, and 6) according to an embodiment may change the second state of a parallel connection (1S2P connection) state of a plurality of batteries (e.g., the plurality of batteries 311, 313 of FIGS. 3A, 3B, and 6) to the first state of a serial connection state and connect the plurality of batteries in series to the booster circuitry (e.g., the booster circuitry 323 of FIGS. 3A, 3B, 4, and 6) by a switching operation of the switch circuitry (e.g., the switch circuitry 330 of FIG. 4). According to an embodiment, in order to change to the always-high-voltage state, the electronic device may obtain display state information (e.g., rack dust introduction, malfunction (bending) of a mechanism, or malfunction (crack) of a display) and/or motor state information (e.g., a reduction in driving force of the motor), and based on the obtained display state information and/or the motor state information, identify that a state requiring high-voltage driving is present due to an increase in rolling or sliding friction of the flexible display and a decrease in thrust.

The electronic device according to an embodiment may display a driving battery setting screen 1201 on the flexible display by a request of the user to allow the user to set to change to the always-high-voltage state. When the electronic device receives a selection input by the user for an object 1211 for motor driving voltage performance selection included in the battery setting screen 1201, the electronic device may display an extended screen 1203 from the battery setting screen 1201. Here, the battery setting screen 1201 may be an example for entering a motor voltage setting screen related to motor driving performance, and is not limited thereto. The extended screen 1203 may include a first object (e.g., automatic) 1221 and a second object (e.g., manual) 1223 for selecting motor driving voltage performance, and is not limited thereto and may further include other necessary objects. According to an embodiment, when the electronic device receives a selection input of the second object (e.g., manual) 1223 included in the extended screen 1203 (e.g., a switched screen or a pop-up screen), the electronic device may change to the always-high-voltage state so that the motor is driven at always high voltage. According to an embodiment, when the electronic device receives a selection input or a designated gesture input for the second object (e.g., manual) 1223, the electronic device may display a guidance message (e.g., "It is recommended to set this when the motor driving force is decreased or the sliding friction is increased by identifying the terminal state information, and the motor is always driven at maximum output (motor series high voltage) according to the user setting") on the extended screen 1203. Without being limited thereto, a guidance message (e.g., information, text, or description) may be displayed in an area adjacent to the second object 1223.

When the electronic device according to an embodiment receives a selection input of the first object (e.g., automatic) 1221 included in the extended screen 1203, the electronic device may automatically determine an optimal driving voltage based on conditions set based on a remaining battery capacity (e.g., a battery voltage) and/or low-temperature operation and drive the motor. According to an embodiment, the electronic device may display a guidance message (e.g., "An optimal motor driving voltage type is determined by considering a battery voltage, a remaining capacity, a temperature, whether charging is performed, or the like") in an area adjacent to the first object (e.g., automatic) 1221 or in the extended screen 1203. Without being limited thereto, when a selection input or a designated gesture input for the first object (e.g., automatic) 1221 is received, a guidance message (e.g., information, text, or description) may be displayed.

According to an embodiment, when the electronic device receives a selection input of the first object (e.g., automatic) 1223 included in the extended screen 1203, the electronic device may perform the methods of operating described in connection to FIGS. 7 to 11, so a detailed description of the operation is omitted.

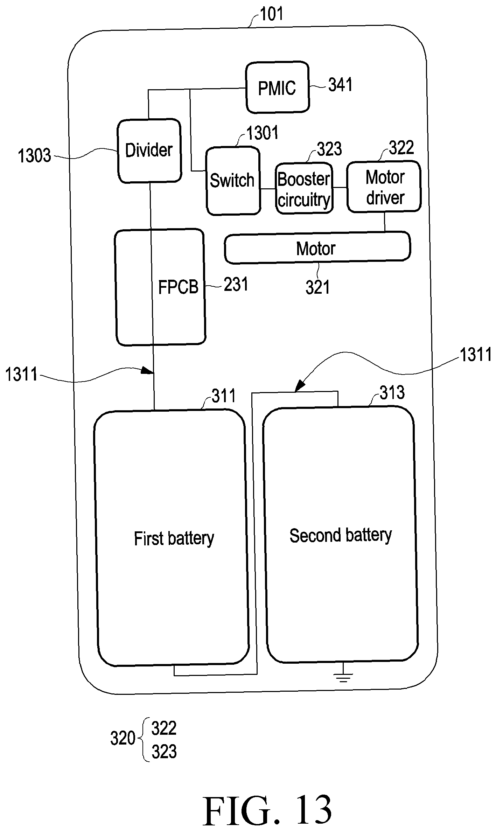

FIG. 13 is a view illustrating a structure of an electronic device according to an embodiment.

Referring to FIGS. 12 and 13, an electronic device 101 (e.g., the electronic device 101 of FIGS. 1, 2, 3A, 3B, and 6) according to an embodiment may include a plurality of batteries 311, 313, a motor 321, a motor driver 322, booster circuitry 323, and a power management module 341. The electronic device 101 may have the plurality of batteries 311, 313 connected in series so that the motor 321 may be driven in the always-high-voltage state. Here, each of the plurality of batteries 311, 313, the booster circuitry 323, the motor driver 322, the motor 321, and the power management module 341 is identical or similar to the structures and operations described in connection to FIGS. 3A and 3B, so a detailed description is omitted. In FIG. 13, a line 1311 illustrating the serial connection of the plurality of batteries 311, 313 may be an electrical connection line briefly illustrated to describe the serial connection of the batteries 311, 313.

According to an embodiment, the electronic device 101 may further include a switch (e.g., a seventh switch) 1301 connected to the booster circuitry 323 and a divider 1303 distributing battery power (e.g., voltage) output from the batteries 311, 313 connected in series to the booster circuitry 323 and the power management module 341. One end of the switch 1301 is connected to the divider 1303, and the other end may be connected to the booster circuitry 323. Here, the divider 1303 may replace the second power management module 243 of FIGS. 3A and 3B or may be additionally added to the structure of the electronic device described in connection to FIGS. 3A and 3B. The divider 1303 may distribute a high voltage applied from the first battery 311 and the second battery 313 connected in series to the power management module 341 and the booster circuitry 323 connected to the switch 1301.

According to an embodiment, when the electronic device 101 receives a selection input of the second object (e.g., manual (always high voltage)) 1223 included in the extended screen 1203 or a selection input of the first object (e.g., automatic) 1221 by the processor, the electronic device 101 may turn on the switch 1301 (e.g., the seventh switch) connected to the divider 1303 to connect the divider 1303 connected to the first battery 311 and the second battery 313 connected in series to the booster circuitry 323.

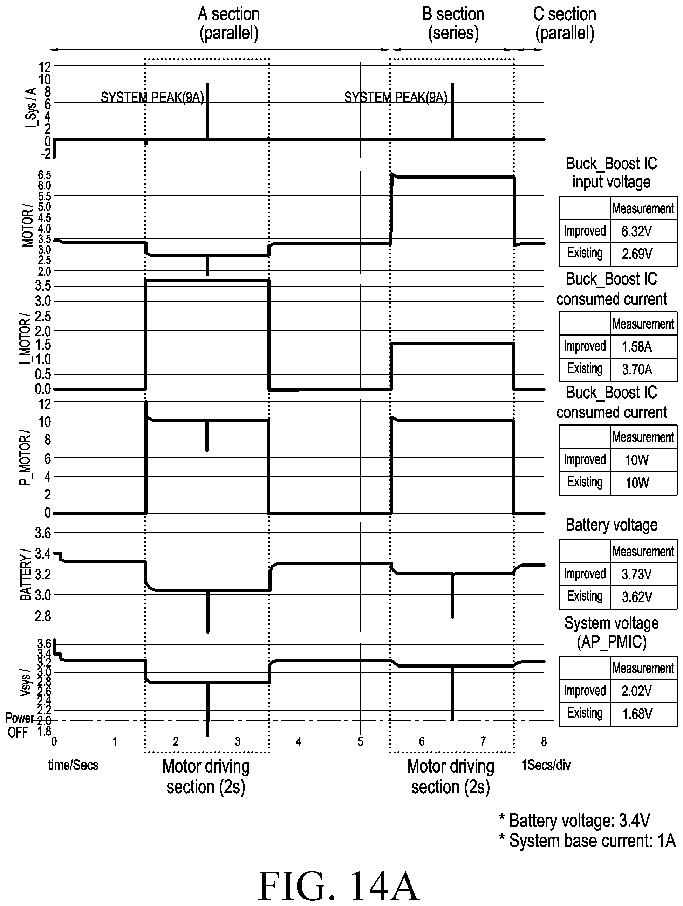

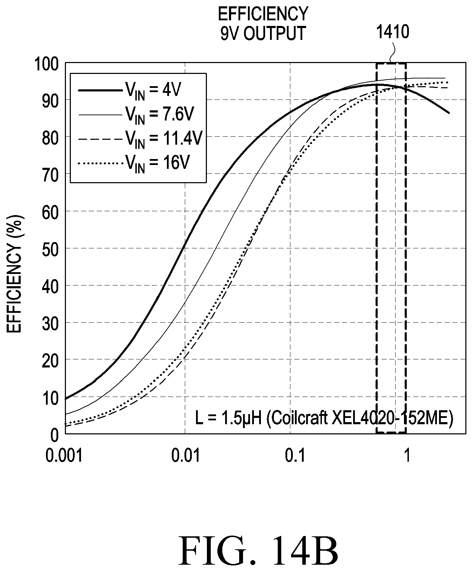

FIGS. 14A and 14B are graphs illustrating an example of a voltage drop and efficiency of booster circuitry of an electronic device according to an embodiment.

When an electronic device (e.g., the electronic device 101 of FIGS. 1, 2, 3A, 3B, 6, and 13) according to an embodiment sets a battery voltage of each of the batteries 311, 313 to, e.g., 3.4 V and sets power consumption of the booster circuitry 323 (or the motor 321) to, e.g., 10 W and performs simulation, a result as illustrated in FIG. 14A may be obtained. In the simulation result, an A section (parallel) and a B section (series) are distinguished, and in the case of the A section (e.g., existing), it may be identified that the system voltage (Vsys) drops to 2 V or less (e.g., 1.68 V) in a system current peak section (e.g., 9 A) during motor driving, resulting in power off.

In the simulation result, as in the B section (series) (e.g., enhanced), when the batteries are connected in series and a high voltage is applied to the booster circuitry during motor driving, the consumed current of the booster circuitry is identified to be a current value (e.g., 1.58 A) decreased compared to the A section (e.g., existing 3.70 A), so the loss is decreased and the voltage drop may be alleviated, and in the B section, the system voltage (Vsys) is 2 V or more (e.g., 2.02 V) in the system current peak section (e.g., 9 A), so power off may not occur. As the plurality of batteries 311, 313 are connected in series in the B section, it may be identified that the input voltage of the booster circuitry is a higher voltage (e.g., 6.32 V) than the A section (e.g., existing 2.69 V), and the battery voltage of the plurality of batteries 311, 313 is a higher voltage (e.g., 3.73 V) than the A section (e.g., existing 3.62 V).

According to an embodiment, the electronic device may identify through the simulation result illustrated in FIG. 14A that there is an effect of enhancing voltage drop when a high voltage is applied to the input terminal of the booster circuitry by connecting the batteries in series during motor driving, so the electronic device may drive the motor while securing system stability even at a low battery level.

According to an embodiment, since the booster circuitry has higher efficiency as the difference between the output voltage and the input voltage is decreased, if the input voltage is low when the booster circuitry attempts to output a high voltage output, the efficiency may decrease. According to an embodiment of the disclosure, when a high voltage is applied from the plurality of batteries connected in series to the booster circuitry or a charging voltage (e.g., V_{BUS} 9 V) is applied from an external charging device, it may be seen that the booster circuitry may obtain higher efficiency compared to 4 V when high voltages (e.g., 7.6 V, 11.4 V, or 16 V) are applied as in a specific section 1410 of FIG. 14B. For example, when 4 V is applied as the booster input voltage, the booster circuitry may boost 5 V to output a designated output voltage (e.g., 9 V). When 7.6 V is applied, the booster circuitry may boost 1.6 V to output a designated output voltage (e.g., 9 V). Accordingly, when 7.6 V is applied, the booster circuitry may obtain higher efficiency compared to 4 V because the difference between the input voltage and the output voltage is decreased.

The electronic device according to an embodiment may minimize a voltage drop of the plurality of batteries, increase the efficiency of the booster circuitry, and secure stability of the system power. Other various effects may be provided directly or indirectly in the disclosure. Effects obtainable from the disclosure are not limited to the above-mentioned effects, and other effects not mentioned may be apparent to one of ordinary skill in the art from the following description.

The electronic device according to an embodiment may connect only the first battery to the motor driving circuitry completely separated from the system circuitry (e.g., use the first battery exclusively for the motor) so that there is no power drop in the system circuitry and apply a high voltage supplied from the first battery to the motor by the motor driving circuitry.

According to an embodiment, a method of operating in an electronic device (e.g., the electronic device 101 of FIGS. 1, 2, 3A, 3B, 6, and 13) may include an operation of identifying an event for switching an electrical connection state of a plurality of batteries (e.g., the plurality of batteries 311, 313 of FIGS. 2, 3A, 3B, 4, 6, and 13) of the electronic device. According to an embodiment, the method may include an operation of, based on the identified event, controlling switch circuitry (e.g., the switch circuitry 330 of FIG. 4) of the electronic device to switch the electrical connection state of the plurality of batteries from a first state to a second state or from the second state to the first state. According to an embodiment, the first state is a state connecting the plurality of batteries in series, the second state is a state connecting the plurality of batteries in parallel, and the switch circuitry includes a plurality of switches and may be connected to motor driving circuitry (e.g., the motor driving circuitry 320 of FIGS. 3A and 3B) of the electronic device including a motor (e.g., the motor 321 of FIGS. 3A, 3B, 6, and 13) configured to drive at least a portion of a flexible display (e.g., the display module 160 of FIG. 1, the flexible display 261 of FIG. 2) of the electronic device and the plurality of batteries to move.

According to an embodiment, the motor driving circuitry may further include booster circuitry (e.g., the booster circuitry 323 of FIGS. 3A, 3B, 6, and 13) connected to the plurality of batteries and the motor.

According to an embodiment, the method may further include an operation of, based on the electrical connection state being switched to the first state, applying power of a first voltage to the motor by the booster circuitry connected to the plurality of batteries switched to the first state to drive the motor, and an operation of, based on the electrical connection state being switched to the second state, applying power of a second voltage to the motor by the booster circuitry connected to the plurality of batteries switched to the second state to drive the motor.

According to an embodiment, the operation of controlling the switch circuitry may include an operation of turning off a first switch, a third switch, and a fifth switch included in the switch circuitry to switch the connection state to the first state and an operation of turning on a second switch and a fourth switch included in the switch circuitry.

According to an embodiment, the first switch is connected between the plurality of batteries and the booster circuitry, the second switch is connected between the booster circuitry and an input terminal of a second battery among the plurality of batteries, the third switch is connected between an input terminal of a first battery among the plurality of batteries and the input terminal of the second battery, the fourth switch is connected between the input terminal of the first battery and the output terminal of the second battery and a ground, and the fifth switch may be connected between the output terminal of the second battery and a ground.

According to an embodiment, the event may be generated based on at least one of a battery voltage, a remaining battery capacity, user setting information, a current temperature, or information indicating whether charging is performed.

According to an embodiment, the operation of controlling the switch circuitry may include an operation of turning on the first switch, the third switch, and the fifth switch included in the switch circuitry to switch the connection state to the second state and an operation of turning off the second switch and the fourth switch included in the switch circuitry.

According to an embodiment, the method may further include an operation of continuously supplying system power from a first battery among the plurality of batteries to a power management module.

According to an embodiment, the method may further include an operation of, based on identifying that the driving of the motor is completed, controlling the switch circuitry to switch the plurality of batteries to the second state.

According to an embodiment, the operation of controlling the switch circuitry may include an operation of, based on a motor driving voltage being greater than or equal to a battery voltage, controlling the switch circuitry to switch to the first state.

According to an embodiment, the operation of controlling the switch circuitry may include an operation of, based on the battery voltage being less than a reference voltage, controlling the switch circuitry to switch to the first state.

According to an embodiment, the operation of controlling the switch circuitry may include an operation of obtaining a temperature value from at least one of at least one temperature sensor of the electronic device or an external electronic device and an operation of, based on the temperature value being less than or equal to a threshold temperature value, controlling the switch circuitry to switch to the first state.

According to an embodiment, the operation of controlling the switch circuitry may include an operation of turning on a sixth switch disposed between an external charging device and the booster circuitry to apply a charging voltage supplied from the external charging device to the booster circuitry while the plurality of batteries are in the second state and an operation of turning off the first switch connected between the plurality of batteries connected in parallel and the booster circuitry.

According to an embodiment, the operation of controlling the switch circuitry may include an operation of, in response to a request of a user, controlling the switch circuitry to switch to the first state without performing switching of the electrical connection state of the plurality of batteries based on the event.

According to an embodiment, in a non-transitory storage medium storing one or more programs, the one or more programs may include an operation of identifying an event for switching an electrical connection state of a plurality of batteries (e.g., the plurality of batteries 311, 313 of FIGS. 2, 3A, 3B, 4, 6, and 13) of the electronic device, when executed by at least one processor (e.g., the processor 120 of FIG. 1) of an electronic device (e.g., the electronic device 101 of FIGS. 1, 2, 3A, 3B, 6, and 13), and an operation of, based on the identified event, controlling switch circuitry (e.g., the switch circuitry 330 of FIG. 4) of the electronic device to switch the electrical connection state of the plurality of batteries from a first state to a second state or from the second state to the first state.

According to an embodiment, in a non-transitory storage medium storing one or more programs, the first state is a state connecting the plurality of batteries in series, the second state is a state connecting the plurality of batteries in parallel, and the switch circuitry includes a plurality of switches and may be connected to motor driving circuitry (e.g., the motor driving circuitry 320 of FIGS. 3A and 3B) of the electronic device including a motor (e.g., the motor 321 of FIGS. 3A, 3B, 6, and 13) configured to drive at least a portion of a flexible display (e.g., the display module 160 of FIG. 1, the flexible display 261 of FIG. 2) of the electronic device and the plurality of batteries to move.

The embodiments disclosed herein are proposed for description and understanding of the disclosed technology and does not limit the scope of the disclosure. Accordingly, the scope of the disclosure should be interpreted as including all changes or various embodiments based on the technical spirit of the disclosure.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. In this document, each of phrases such as "A or B," "at least one of A and B," "at least one of A or B," "A, B, or C," "at least one of A, B, and C," and "at least one of A, B, or C" may include any one of the items listed together in the corresponding phrase, or all possible combinations thereof. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semipermanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component of the above-described components (e.g., a module or a program) may include a single entity or a plurality of entities, and some of the plurality of entities may be separately disposed in other components. According to various embodiments, one or more components or operations among the above-described corresponding components may be omitted, or one or more other components or operations may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a plurality of batteries (311, 313);
a flexible display (261);
a motor (321) configured to drive at least a portion of the flexible display to move;
motor driving circuitry (320) connected to the motor;
switch circuitry (330) including a plurality of switches, configured to switch between a first state connecting the plurality of batteries in series and a second state connecting the plurality of batteries in parallel;
memory (130) storing instructions; and
at least one processor (120),
wherein the instructions, when executed by the at least one processor individually or collectively, cause the electronic device to:
identify an event for switching an electrical connection state of the plurality of batteries; and
based on the identified event, control the switch circuitry to switch the electrical connection state from the first state to the second state or from the second state to the first state.

2. The electronic device of claim 1, wherein the motor driving circuitry includes booster circuitry (323) connected to the plurality of batteries and the motor, and
wherein the instructions, when executed by the at least one processor individually or collectively, cause the electronic device to:
based on the electrical connection state being switched to the first state, apply power of a first voltage to the motor by the booster circuitry; and
based on the electrical connection state being switched to the second state, apply power of a second voltage to the motor by the booster circuitry.

3. The electronic device of claim 1 or 2, wherein the switch circuitry comprises:
a first switch connected between the plurality of batteries and the booster circuitry;
a second switch connected between the booster circuitry and an input terminal of a second battery among the plurality of batteries;
a third switch connected between an input terminal of a first battery among the plurality of batteries and the input terminal of the second battery;
a fourth switch connected between the input terminal of the first battery and the output terminal of the second battery and a ground; and
a fifth switch connected between the output terminal of the second battery and a ground,
wherein the instructions, when executed by the processor individually or collectively, cause the electronic device to:
turn off the first switch, the third switch, and the fifth switch, and turn on the second switch and the fourth switch to switch the electrical connection state to the first state; and
turn on the first switch, the third switch, and the fifth switch, and turn off the second switch and the fourth switch to switch the electrical connection state to the second state, and
wherein the event is generated based on at least one of a battery voltage, a remaining battery capacity, user setting information, a current temperature, or information indicating whether charging is performed.

4. The electronic device of any one of claims 1 to 3, further comprising a power management module (188, 340),
wherein the power management module is connected to a first battery among the plurality of batteries to continuously receive system power from the first battery, and is configured to be connected to the booster circuitry when a first switch is turned on.

5. The electronic device of any one of claims 1 to 4, wherein the instructions, when executed by the at least one processor individually or collectively, cause the electronic device to:
identify that a motor driving signal for driving the motor (321) is generated;
in response to identifying the motor driving signal, determine a motor driving voltage based on at least one of a battery voltage, a remaining battery capacity, user setting information, a current temperature, or information indicating whether charging is performed; and
based on the determined motor driving voltage being greater than or equal to a battery voltage, control the switch circuitry to switch the electrical connection state to the first state.

6. The electronic device of any one of claims 1 to 5, wherein the instructions, when executed by the at least one processor individually or collectively, cause the electronic device to:
based on the battery voltage being less than a reference voltage of a low voltage, control the switch circuitry to switch the electrical connection state to the first state.

7. The electronic device of any one of claims 1 to 6, further comprising at least one temperature sensor,
wherein the instructions, when executed by the at least one processor individually or collectively, cause the electronic device to:
obtain a temperature value from at least one of the at least one temperature sensor or an external electronic device; and
based on the temperature value being less than or equal to a threshold temperature value, control the switch circuitry to switch the electrical connection state to the first state.

8. The electronic device of any one of claims 1 to 7, further comprising a sixth switch electrically connecting between an external charging device and the booster circuitry to apply a charging voltage supplied from the external charging device to the booster circuitry,
wherein the instructions, when executed by the at least one processor individually or collectively, cause the electronic device to:
while the electrical connection state of the plurality of batteries is the second state, turn on the sixth switch to apply the charging voltage to the booster circuitry and turn off the first switch connected between the plurality of batteries and the booster circuitry.

9. The electronic device of any one of claims 1 to 8, wherein the instructions, when executed by the at least one processor individually or collectively, cause the electronic device to:
in response to a request of a user, control the switch circuitry to maintain the plurality of batteries connected in series without performing switching of the electrical connection state of the plurality of batteries based on the event; and
based on identifying that a driving of the motor is completed, control the switch circuitry to connect the plurality of batteries in parallel to the booster circuitry.

10. A method of operating in an electronic device (101), the method comprising:
identifying an event for switching an electrical connection state of a plurality of batteries (311, 313) of the electronic device; and
based on the identified event, controlling switch circuitry (330) of the electronic device to switch the electrical connection state from a first state to a second state or from the second state to the first state,
wherein the first state is a state connecting the plurality of batteries in series,
the second state is a state connecting the plurality of batteries in parallel, and
the switch circuitry includes a plurality of switches and is connected to motor driving circuitry (320) of the electronic device connected to the plurality of batteries and a motor (321) configured to drive at least a portion of a flexible display (261) of the electronic device to move.

11. The method of claim 10, wherein the motor driving circuitry further includes booster circuitry (323) connected to the plurality of batteries and the motor, and
wherein the method further comprises:
based on the electrical connection state being switched to the first state, applying power of a first voltage to the motor by the booster circuitry to drive the motor; and
based on the electrical connection state being switched to the second state, applying power of a second voltage to the motor by the booster circuitry to drive the motor.

12. The method of claim 10 or 11, wherein controlling the switch circuitry includes:
turning off a first switch, a third switch, and a fifth switch included in the switch circuitry, and turning on a second switch and a fourth switch included in the switch circuitry to switch the electrical connection state to the first state; and
turning on the first switch, the third switch, and the fifth switch included in the switch circuitry, and turning off the second switch and the fourth switch included in the switch circuitry to switch the electrical connection state to the second state, wherein
the first switch is connected between the plurality of batteries and the booster circuitry,
the second switch is connected between the booster circuitry and an input terminal of a second battery among the plurality of batteries,
the third switch is connected between an input terminal of a first battery among the plurality of batteries and the input terminal of the second battery,
the fourth switch is connected between the input terminal of the first battery and the output terminal of the second battery and a ground, and
the fifth switch is connected between the output terminal of the second battery and a ground.

13. The method of any one of claims 10 to 12, further comprising:
continuously supplying system power from a first battery among the plurality of batteries to a power management module of the electronic device; and
based on identifying that the driving of the motor is completed, controlling the switch circuitry to switch the electrical connection state to the second state,
wherein the event is generated based on at least one of a battery voltage, a remaining battery capacity, user setting information, a current temperature, or information indicating whether charging is performed, and
wherein controlling the switch circuitry includes:
based on a motor driving voltage being greater than or equal to a battery voltage, controlling the switch circuitry to switch the electrical connection state to the first state;
based on the battery voltage being less than a reference voltage, controlling the switch circuitry to switch the electrical connection state to the first state; and
based on a temperature obtained from at least one of at least one temperature sensor of the electronic device or an external electronic device being less than or equal to a threshold temperature value, controlling the switch circuitry to switch the electrical connection state to the first state.

14. The method of any one of claims 10 to 13, further comprising:
while the electrical connection state of the plurality of batteries is the second state, turning on a sixth switch connected between an external charging device and the booster circuitry to apply a charging voltage supplied from the external charging device to the booster circuitry; and
turning off the first switch connected between the plurality of batteries and the booster circuitry.

15. A non-transitory storage medium storing one or more programs, wherein the one or more programs include instructions executable to cause an electronic device (101), when executed by at least one processor (120) of the electronic device, to perform operations comprising:
identifying an event for switching an electrical connection state of a plurality of batteries (311, 313) of the electronic device; and
based on identifying the event, controlling switch circuitry (330) of the electronic device to switch the electrical connection state of the plurality of batteries from a first state to a second state or from the second state to the first state,
wherein the first state is a state connecting the plurality of batteries in series,
the second state is a state connecting the plurality of batteries in parallel, and
the switch circuitry includes a plurality of switches and is connected to motor driving circuitry (320) of the electronic device connected to the plurality of batteries and a motor (321) configured to drive at least a portion of a flexible display (261) of the electronic device to move.
